# EUROPÄISCHE PATENTANMELDUNG

(11) **EP 2 392 449 A2**
(43) Veröffentlichungstag der Anmeldung: **07.12.2011**
(21) Anmeldenummer: 11168081.5
(22) Anmeldetag: 30.05.2011
(51) Int. Cl.: B29C 65/10, B60G 21/055, B29C 35/04, B29L 31/30, B29K 21/00

(54) **Verfahren zum Verbinden eines Gummilagers mit einem Stabilisator für ein Kraftfahrzeug und eine Vorrichtung zum Verbinden eines Gummilagers mit einem Stabilisator**

(30) Priorität: 02.06.2010 DE 102010022487
(71) Anmelder: Benteler Automobiltechnik GmbH, 33102 Paderborn (DE)
(72) Erfinder: Düpmeier, Tobias, 33098 Paderborn (DE); Hammelmaier, Ullrich, 33104 Paderborn (DE); Koczar, Peter, 65205 Wiesbaden (DE); Seibt, Oliver, 33102 Paderborn (DE)
(74) Vertreter: Ksoll, Peter

(57) **Zusammenfassung**

Die Erfindung betrifft ein Verfahren zum Verbinden eines Gummilagers (3) mit einem Stabilisator (2) für ein Kraftfahrzeug, bei welchem das Gummilager (3) auf dem Stabilisator (2) montiert wird und bei welchem das Gummilager (3) anschließend postvulkanisiert wird, wobei die zur Postvulkanisation notwendige Temperatur mittels Heißluft erzeugt wird. Darüber hinaus betrifft die Erfindung eine Vorrichtung zur Verbindung eines Gummilagers (3) mit einem Stabilisator (2) für ein Kraftfahrzeug.

## Beschreibung

Die Erfindung betrifft ein Verfahren zum Verbinden eines Gummilagers mit einem Stabilisator für ein Kraftfahrzeug mit den Merkmalen im Oberbegriff von Patentanspruch 1 sowie eine Vorrichtung zum Verbinden eines Gummilagers mit einem Lager.

Es zählt im Kraftfahrzeugbereich zum Stand der Technik, Stabilisatoren mittels Gummilagern, wie beispielsweise Drehstabschulterlagern oder Stabilisatorlagern, an die Fahrzeugkarosserie anzubinden. Dabei werden die Gummilager meist als geschlitzte oder geteilte Ausführungen auf den Stabilisator aufgeschoben und anschließend mit einer Schelle unter Spannung gebracht und an die Fahrzeugkarosserie montiert.

Zur Verringerung des Verschleißes und der damit erzielbaren Erhöhung der Lebensdauer ist es weiterhin bekannt, die Gummilager zusätzlich zu postvulkanisieren. Dabei kann durch den Einsatz eines Haftvermittlers eine stoffschlüssige Verbindung zwischen dem Gummilager und beispielsweise dem Stabilisatorlager erzielt werden.

Um die zur Postvulkanisation notwendige Prozesswärme zu erzeugen, ist es beispielsweise aus der EP 1 515 833 bekannt, einen Stabilisator mit einem Gummilager induktiv zu erwärmen. Dabei erfährt das Gummilager keine direkte Erwärmung, sondern wird nur indirekt über den Stabilisator erwärmt. Nachteilig hieran ist, dass es bei einer direkten Anordnung des Induktors nahe dem Gummilager zu einer Überhitzung der metallischen Lagerkomponenten kommen kann, was wiederum zu einer lokalen Schädigung des Gummilagers führen kann. Darüber hinaus ist der aparative Aufwand für die induktive Erwärmung eines Stabilisators mit relativ hohen Kosten verbunden.

Ausgehend von diesem Stand der Technik liegt der Erfindung die Aufgabe zugrunde, ein Verfahren zum Verbinden eines Gummilagers mit einem Stabilisator für ein Kraftfahrzeug aufzuzeigen, bei welchem Prozessaufwand und Prozesskosten verringert sind, sowie eine Vorrichtung aufzuzeigen, in welcher ein Gummilager mit einem Stabilisator nach vorgenanntem Verfahren verbunden werden kann.

Der verfahrensmäßige Teil der Aufgabe wird durch ein Verfahren mit den Maßnahmen in Patentanspruch 1 gelöst.

Der gegenständliche Teil der Aufgabe wird durch eine Vorrichtung mit den Merkmalen in Patentanspruch 9 gelöst.

Vorteilhafte Ausgestaltungen und Maßnahmen des Erfindungsgedankens sind Gegenstand der jeweiligen Unteransprüche.

Bei dem erfindungsgemäßen Verfahren zum Verbinden eines Gummilagers mit einem Stabilisator für ein Kraftfahrzeug wird das Gummilager auf dem Stabilisator montiert und anschließend postvulkanisiert. Dabei wird die zur Postvulkanisation des Gummilagers notwendige Temperatur mittels Heißluft erzeugt.

Vorzugsweise wird das Gummilager vorvulkanisiert,

Es ist natürlich ebenso denkbar, die Postvulkanisation der auf dem Stabilisatorstab montierten Gummilager nacheinander durchzuführen. Mit dem Heißluftgebläse können über eine Ansteuerung in einfacher Art und Weise während der Postvulkanisation verschiedene Temperaturprofile realisiert werden. Vorteilhaft ist es, insbesondere im Hinblick auf eine Verkürzung der Prozessdauer, am Heißluftgebläse zu Beginn der Postvulkanisation eine Temperatur einzustellen, welche oberhalb der zur Postvulkanisation des Gummilagers notwendigen Temperatur liegt. Dadurch wird ein schnelles Aufheizen des Gehäuses auf die zur Postvulkanisation notwendige Temperatur erzielt. Nach Erreichen dieser Temperatur im Innenraum des Gehäuses wird das Heißluftgebläse so angesteuert, dass die Temperatur der Heißluft auf die zur Postvulkanisation notwendige Temperatur verringert wird.

Die Steuerung des Temperaturverlaufs kann über einen am Gummilager angeordneten Sensor erfolgen. In der Praxis vorteilhaft kann auch die Temperatur der Heißluft oder die Temperatur am Stabilisator mittels eines Sensors gemessen werden. Infolge dessen können die Temperaturen in Abhängigkeit der gerade am Gummilager herrschenden Temperatur variiert werden. Das Ziel ist dabei stets, am Gummilager eine Temperatur von etwa 160°C zu gewährleisten, damit die Postvulkanisation des Gummis stattfinden kann.

Ein solches Temperaturprofil könnte beispielsweise zu Beginn eine Heißlufttemperatur von etwa 600°C +/- 20°C aufweisen, mittels welcher das Gummilager dann für wenige Minuten beaufschlagt wird. Versuche haben gezeigt, dass beispielsweise bei dieser Heißlufttemperatur zwei bis drei Minuten ausreichen, um das Gummilager auf 160°C zu erwärmen. Ein Sensor, welcher die Temperatur am Gummilager, der Heißluft oder am Stabilisator ständig überwacht, gibt mit Erreichen der 160°C ein Signal an das Heißluftgebläse. Das Heißluftgebläse wird daraufhin auf eine Temperatur von beispielsweise 240°C +/- 20°C herunter geregelt. Es hat sich herausgestellt, dass diese Temperatur genügt, um die bereits erreichte Vulkanisationstemperatur von 160°C am Gummilager zuverlässig über den gewünschten Vulkanisationszeitraum zu halten.

Zur Durchführung der Postvulkanisation wird der Stabilisator mit dem montierten Gummilager in einem Gehäuse angeordnet, welches direkt an ein Heißluftgebläse angeschlossen ist.

Beim Verbinden eines Stabilisators mit zwei Gummilagern können diese beispielsweise parallel mit Heißluft beaufschlagt werden. Hierzu wird die Heißluft vorzugsweise von einem Gebläse über verzweigte Kanäle zum jeweiligen Gummilager geleitet.

Denkbar ist zum einen, das Gummilager solange mit einer konstanten Temperatur zu beaufschlagen, bis die gewünschte Postvulkanisation erfolgt ist. Die Temperatur der Heißluft beträgt hierzu vorzugsweise zwischen 250°C bis 350°C.

Um das Gummilager bei der Aufheizung des Innenraums des Gehäuses vor Überhitzung zu schützen, kann insbesondere zu Beginn der Postvulkanisation zwischen dem Gummilager und einem Zugang vom Gehäuse zum Heißluftgebläse ein Hitzeschutzblech angeordnet werden. In einer vorteilhaften Ausführung kann das Hitzeschutzblech verschiebbar gelagert sein, so dass es nach Verringerung der Temperatur der Heißluft entfernt werden kann.

Die erfindungsgemäße Vorrichtung zur Postvulkanisation eines Gummilagers auf einen Stabilisator für ein Kraftfahrzeug umfasst ein an ein Heißluftgebläse angeschlossenes Gehäuse, in welchem der mit dem Gummilager bestückte Stabilisatorabschnitt angeordnet werden kann.

Dieses Gehäuse kann in einer einfachen Ausführung eine Art Trichter sein, welcher den Heißluftstrom auf das unterhalb des Trichters angeordnete Gummilager ausrichtet.

In einer anderen Ausführungsform kann ein Innenraum des Gehäuses nach Aufnahme eines mit dem Gummilager bestückten Stabilisators durch eine Klappe verschließbar sein. Dabei weisen sich quer zu einer Längsachse des Stabilisators erstreckende Seitenwände des Gehäuses Ausnehmungen auf, welche den Durchtritt der über das Gummilager hinausragenden Stabilisatorabschnitte aus dem Gehäuse ermöglichen.

Um die Stabilisatorabschnitte in den Ausnehmungen anordnen zu können, sind die Ausnehmungen in Richtung der Klappe offen ausgestaltet und werden erst mit dem Schließen der Klappe ebenfalls geschlossen, was gleichzeitig einer Sicherung des Stabilisators in seiner Position dient.

Zur Erzielung einer ausreichenden und gleichmäßigen Erwärmung des Gummilagers ist es vorteilhaft, eine Breite des Gehäuses so auszugestalten, dass sie in etwa einer 1,2 bis 1,5-fachen Länge des Gummilagers entspricht. So wird verhindert, dass ein sich einstellender Temperaturgradient vom Gummilager zu den Ausnehmungen, durch welche über das Gummilager hinausragende Stabilisatorabschnitte aus dem Gehäuse nach außen treten, einen Einfluss auf die gleichmäßige Vulkanisation des Gummilagers hat.

In einer weiteren vorteilhaften Ausführung wird der mit dem Gummilager bestückte Stabilisator über Führungen in das Gehäuse eingebracht. Gleichzeitig dienen diese Führungen auch dazu, während der Postvulkanisation Stabilisator und Gummilager in ihrer Position in der Mitte des Gehäuses zu halten.

Wird zu Prozessbeginn wie voranstehend ausgeführt eine höhere Temperatur als die Temperatur der Vulkanisation des Gummilagers eingestellt, kann vorteilhafterweise zwischen einem Zugang zum Heißluftgebläse und dem Gummilager im Innenraum des Gehäuses ein Hitzeschutzblech angeordnet sein. Dieses ist vorteilhafterweise verlagerbar angeordnet und kann so nach Einstellen der optimalen Vulkanisationstemperatur im weiteren Prozessverlauf zwischen dem Zugang zum Heißluftgebläse und dem Gummilager entfernt werden.

Der Vorteil des Verfahrens in Verbindung der voranbeschriebenen Vorrichtung zur Heißlufterwärmung liegt insbesondere darin, dass der Stabilisator nur in dem Bereich erwärmt wird, in welchem das Gummilager montiert ist. Es erfolgt folglich eine lokale Erwärmung im Bereich der Postvulkanisation mittels Heißluft. Dies verkürzt die Prozesszeiten im Vergleich zu herkömmlichen Ofenprozessen in Kammer- oder Durchlauföfen. Da das Gehäuse Ausnehmungen zum Durchtritt der über das Gummilager hinausragenden Stabilisatorabschnitte aus dem Gehäuse aufweist, kann dieses relativ klein gehalten werden, so dass auch ein aufzuheizender Innenraum des Gehäuses klein gehalten werden kann. Dadurch wird im Innenraum schneller die zur Vulkanisation notwendige Temperatur erreicht. Somit ist die Vorrichtung nicht nur platz- sondern auch sehr energiesparend. Darüber hinaus ist der Aufbau einer solchen Heißluftanlage sowie deren Wartung und Ansteuerung sehr kostengünstig im Vergleich zu einer Vorrichtung zur induktiven erwärmten Postvulkanisation.

Die Erfindung ist nachfolgend anhand schematisch dargestellter Ausführungsbeispiele in den Figuren näher beschrieben. Es zeigen:

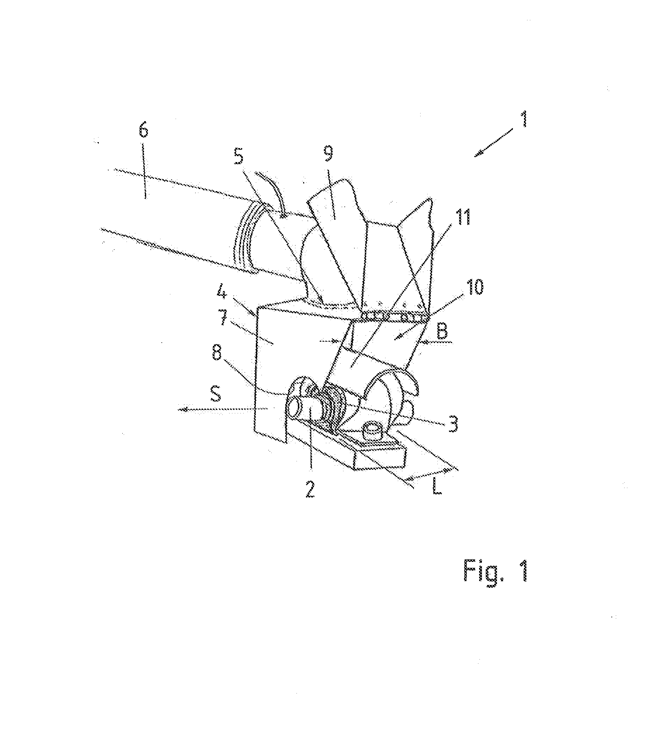

- Figur 1: eine Vorrichtung zur Postvulkanisation eines Gummilagers;
- Figur 2: eine Ausführungsform der Vorrichtung mit Heißluftgebläse und
- Figur 3: eine alternative Ausführungsform der Vorrichtung mit Heißluftgebläse.

Die Figur zeigt eine Vorrichtung 1 zur Postvulkanisation eines auf einem Stabilisator 2 montierten Gummilagers 3. Das Gehäuse 4 der Vorrichtung 1 ist über einen Zugang 5 mit einem Heißluftgebläse 6 verbunden. Das Gehäuse 4 weist in seinen sich quer zur Längsrichtung S des Stabilisators 2 erstreckenden Seitenwänden 7 Ausnehmungen 8 auf. Diese Ausnehmungen 8 sind in Richtung einer zum Verschließen des Gehäuses 4 vorgesehenen Klappe 9 offen ausgestaltet, so dass der Stabilisator 2 in den Ausnehmungen 8 angeordnet werden kann. Nach dem Einbringen des Stabilisators 2 mit dem Gummilager 3 in das Gehäuse 4 ragt dieser über die Ausnehmungen 8 von einem Innenraum 10 des Gehäuses 4 nach außen. Dies ermöglicht die Dimensionierung des Gehäuses 4 derart, dass es nur den mit dem Gummilager 3 bestückten Bereich des Stabilisators 2 aufnehmen muss und somit platzsparend klein gehalten werden kann. Beim Verschließen des Gehäuses 4 über die Klappe 9 werden gleichzeitig auch die Ausnehmungen 8 verschlossen, so dass der Stabilisator 2 zusätzlich in seiner Position gesichert ist.

Eine Breite B des Gehäuses 4 entspricht in dieser Darstellung in etwa dem 1,3-fachen der Länge L des Gummilagers 2. Dadurch wird sichergestellt, dass trotz der in den Seitenwänden 7 vorgesehenen Ausnehmungen 8 die Temperatur im mittleren Bereich des Innenraums 10 des Gehäuses 4 konstant gehalten werden kann und ein gleichmäßiges Vulkanisieren des Gummilagers 3 gewährleistet ist.

Zwischen dem Gummilager 3 und dem Zugang 5 zum Heißluftgebläse 6 ist ein Hitzeschutzblech 11 vorgesehen. Dieses schützt das Gummilager 3 vor Überhitzung, wenn zu Beginn der Postvulkanisation Heißluft mit einer Temperatur höher als die zur Postvulkanisation notwendige Temperatur aus dem Heißluftgebläse in den Innenraum 10 hineinströmt.

Wird ein Stabilisator mit ein einem lackierten Stabilisatorstab eingesetzt, liegt die maximal einstellbare Temperatur bei 200°C, um eine Schädigung zu vermeiden.

Nach Verringerung der Temperatur der Heißluft auf die zur Vulkanisation notwendige Temperatur kann das Hitzeschutzblech 11 entfernt werden.

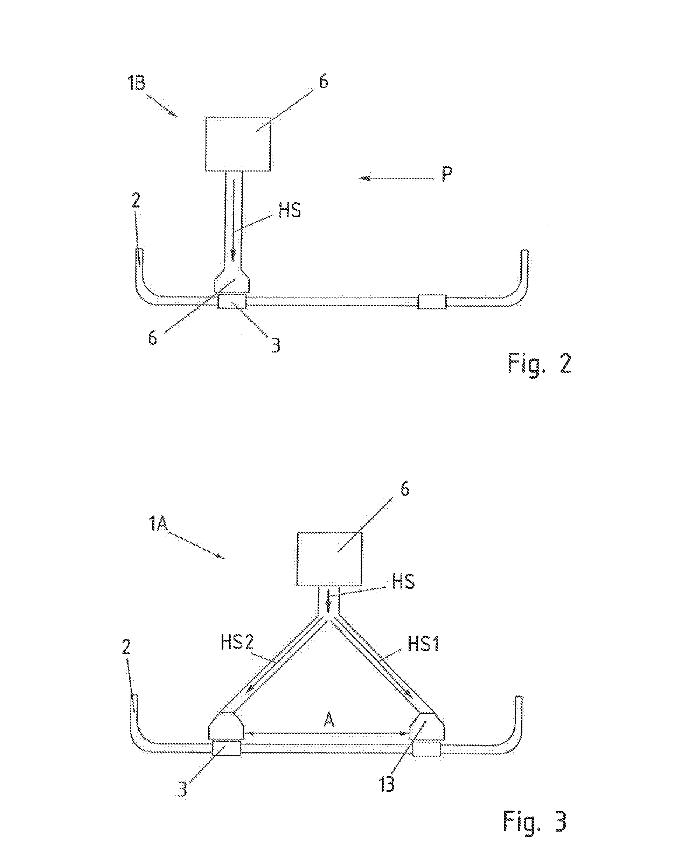

Mittels der in Figur 2 gezeigten Vorrichtung 1A werden zwei auf einem Stabilisator 2 angeordnete Gummilager 3 nacheinander postvulkanisiert. Hierzu werden die Gummilager in Bearbeitungsrichtung P nacheinander an dem mit dem Heißluftgebläse 6 verbundenen Gehäuse 12 der Vorrichtung 1A vorbeigeführt. Das Gehäuse 12 ist dabei zumindest abschnittsweise trichterförmig ausgestaltet und verteilt so einen vom Heißluftgebläse 6 kommenden Heißluftstrom HS gleichmäßig über das unterhalb des Gehäuses 12 angeordnete Gummilager 3.

Figur 3 zeigt eine zu Figur 2 alternative Ausführung der Vorrichtung 1 B. Hierbei wird ein vom Heißluftgebläse 6 kommender Heißluftstrom HS in zwei Teilströme HS1, HS2 aufgeteilt. Diese Teilströme HS1, HS2 werden in zwei parallel angeordnete Gehäuse 13 geleitet. So können zwei auf einem Stabilisator 2 angeordnete Gummilager 3 gleichzeitig postvulkanisiert werden. Dabei kann ein Abstand A zwischen den Gehäusen 13 in Abhängigkeit zum Abstand der Gummilager 3 auf dem Stabilisator eingestellt werden.

### Bezugszeichen:

- 1 -: Vorrichtung
- 1A -: Vorrichtung
- 1 B -: Vorrichtung
- 2 -: Stabilisator
- 3 -: Gummilager
- 4 -: Gehäuse
- 5 -: Zugang
- 6 -: Heißluftgebläse
- 7 -: Seitenwände
- 8 -: Ausnehmung
- 9 -: Klappe
- 10 -: Innenraum
- 11 -: Hitzeschutzblech
- 12 -: Gehäuse
- 13 -: Gehäuse

- A -: Abstand
- B -: Breite
- HS -: Heißluftstrom
- HS1 -: Teilstrom
- HS2 -: Teilstrom
- L -: Länge
- S -: Längsrichtung von 2
- P -: Bearbeitungsrichtung

## Patentansprüche

1. Verfahren zum Verbinden wenigstens eines Gummilagers (3) mit einem Stabilisator (2) für ein Kraftfahrzeug, bei welchem das Gummilager (3) auf dem Stabilisator (2) montiert wird und bei welchem das Gummilager (3) anschließend postvulkanisiert wird, **dadurch gekennzeichnet, dass** die zur Postvulkanisation notwendige Temperatur mittels Heißluft erzeugt wird, wobei mit dem Heißluftgebläse (6) unterschiedliche Temperaturprofile realisiert werden und wobei ein Verlauf der Temperaturprofile mittels eines die Temperatur des Gummilagers (3) oder die Temperatur der Heißluft oder die Temperatur am Stabilisator (2) messenden Sensors gesteuert wird.

2. Verfahren nach Anspruch 1 **dadurch gekennzeichnet, dass** das Gummilager (3) vorvulkanisiert wird.

3. Verfahren nach Anspruch 1 oder 2, **dadurch gekennzeichnet, dass** der Stabilisator (2) mit dem montierten Gummilager (3) zur Postvulkanisation ein einem an ein Heißluftgebläse (6) angeschlossenes Gehäuse (4) angeordnet wird.

4. Verfahren nach einem der Ansprüche 1 bis 3, **dadurch gekennzeichnet, dass** mehrere Gummilager (3) nacheinander mittels des Heißluftgebläses (6) postvulkanisiert werden.

5. Verfahren nach einem der Ansprüche 1 bis 3, **dadurch gekennzeichnet, dass** mehrere Gummilager parallel mittels des Heißluftgebläses (6) postvulkanisiert werden.

6. Verfahren nach Anspruch einem der Ansprüche 1 bis 5, **dadurch gekennzeichnet, dass** das Heißluftgebläse (6) zu Beginn der Postvulkanisation eine Temperatur erzeugt, welche oberhalb der zur Postvulkanisation notwendigen Temperatur liegt.

7. Verfahren nach einem der Ansprüche 1 bis 6, **dadurch gekennzeichnet, dass** nach Erreichen der zur Postvulkanisation notwendigen Temperatur im Gehäuse (4) über das Heißluftgebläse (6) die Temperatur der Heißluft auf die zur Postvulkanisation notwendige Temperatur verringert wird.

8. Verfahren nach einem der Ansprüche 1 bis 7, **dadurch gekennzeichnet, dass** das Gummilager (3) vor Überhitzung geschützt wird, indem zwischen dem Stabilisator mit dem montierten Gummilager (3) und einem Zugang (5) zum Heißluftgebläse (6) ein Hitzeschutzblech (11) eingesetzt wird.

9. Vorrichtung zur Postvulkanisation eines Gummilagers (3) auf einen Stabilisator (2) für ein Kraftfahrzeug umfassend ein an wenigstens ein Gehäuse zur zumindest teilweisen Aufnahme des Gummilagers (3) angeschlossenes Heißluftgebläse (6).

10. Vorrichtung nach Anspruch 9, **dadurch gekennzeichnet, dass** ein Innenraum (10) des Gehäuses (4) nach Aufnahme eines mit dem Gummilager (3) bestückten Stabilisators durch eine Klappe (9) verschließbar ist, wobei sich quer zu einer Längsachse des Stabilisators (2) ersteckende Seitenwände (7) des Gehäuses (4) Ausnehmungen (8) zum Durchtritt von über das Gummilager (3) hinausragenden Stabilisatorabschnitten aufweisen.

11. Vorrichtung nach Anspruch 9 oder 10, **dadurch gekennzeichnet, dass** eine Breite (B) des Gehäuses (4) etwa einer 1,2 bis 1,5 fachen Länge (L) des Gummilagers (3) entspricht.

12. Vorrichtung nach einem der Ansprüche 9 oder 11, **dadurch gekennzeichnet, dass** im Gehäuse (4) Führungen zum geführten Einbringen des mit dem Gummilager (3) bestückten Stabilisators (2) vorgesehen sind.

13. Vorrichtung nach einem der Ansprüche 9 bis 12, **dadurch gekennzeichnet, dass** im Innenraum (10) des Gehäuses (4) ein Hitzeschutzblech (11) angeordnet ist.

14. Vorrichtung nach Anspruch 13, **dadurch gekennzeichnet, dass** das Hitzeschutzblech (11) relativ zum Gummilager (3) verlagerbar angeordnet ist.
